(19) Europäisches Patentamt
European Patent Office
Office européen des brevets

(11) **EP 2 833 328 B1**

(12) **EUROPEAN PATENT SPECIFICATION**

(45) Date of publication and mention
of the grant of the patent:
**14.09.2016 Bulletin 2016/37**

(51) Int Cl.:
**G06T 17/20** *(2006.01)* **B60C 19/00** *(2006.01)*

(21) Application number: **14175812.8**

(22) Date of filing: **04.07.2014**

(54) **Method for generating tire model**

Verfahren zur Erzeugung eines Reifenmodells

Procédé de génération de modèle de pneu

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2013 JP 2013158113**

(43) Date of publication of application:
**04.02.2015 Bulletin 2015/06**

(73) Proprietor: **SUMITOMO RUBBER INDUSTRIES,
LTD.**
**Kobe-shi, Hyogo-ken, 651-0072 (JP)**

(72) Inventors:
• **Tsunoda, Masaya**
  **Kobe-shi, Hyogo-ken, 651-0072 (JP)**
• **Imamura, Ao**
  **Kobe-shi, Hyogo-ken, 651-0072 (JP)**

(74) Representative: **Manitz, Finsterwald & Partner
GbR**
**Martin-Greif-Strasse 1**
**80336 München (DE)**

(56) References cited:
**EP-A1- 1 939 774    JP-A- 2008 155 887**

## Description

## Background of the Invention

The present invention relates to a method for generating a three-dimensional tire model for computer numerical analyses in a short time without the need for good skills and experiences of human.

In recent years, in order to simulate and numerically analyze a tire rolling on or contacting with the ground, various computer simulation methods have been proposed, for example, as disclosed in Japanese Patent Application Publication No. 2008-155887. Such a simulation method uses a three-dimensional finite element (FE) tire model of the entirety or a part of a tire as the analysis object. Such a tire model is usually formed by hexahedral elements, using a meshing program. In such a meshing program, in order that each hexahedral element does not collapse during simulation or deformation calculation, a certain distance is given between every two of division surfaces of the element which are opposite in the tire circumferential direction, and also a certain distance is given between every two of division surfaces of the element which are opposite in the tire axial direction.

On the other hand, when the analysis object is the tread portion of a tire, the analysis object is curved around the tire revolution axis and further curved in the tire meridian section. In this case, namely, when the analysis object is curved in different directions (tire circumferential direction and axial direction), it is difficult for auto-meshing software to produce a FE model in which sufficient distances remain between opposite division surfaces not to collapse during deformation calculation. Therefore, the part of the analysis object which the auto-meshing software or the computer can not properly mesh, has to be meshed manually. Accordingly, there is a need for good skills and experiences of human and it takes much time and energy.

## Summary of the Invention

It is therefore, an object of the present invention to provide a method for generating a tire model in which a tire model for use in computer numerical analyses can be generated in a short time without the need for good skills and experiences of human.

According to the present invention, a method for generating a three-dimensional tire model of an analysis object which is the entirety or a part of an annular tire curved around the tire revolution axis, comprises

a primary process in which a primary tire model made up of three-dimensional elements is obtained by first flatly transforming the curved analysis object so that the primary tire model is not anymore curved around the tire revolution axis, the primary tire model having division surfaces each of which is between the elements adjacent to each other in the tire circumferential direction and defined as being flat and perpendicular to the tread face of the primary tire model, and coordinate values of node points of the elements in the primary tire model being defined based on a Cartesian coordinate system, and

a transforming process in which based on curvature of the analysis object around the tire revolution axis, the coordinate values of the node points of the primary tire model are converted to coordinate values in a cylindrical coordinate system, whereby the primary tire model is transformed into a finish tire model curved around the tire revolution axis correspondingly to the curved analysis object.

The generating method according to the present invention may have the following features (1)-(4):

(1) each of the elements of the primary tire model is a hexahedral element;

(2) a process in which the coordinate values in the cylindrical coordinate system, of the node points of the finish tire model are converted to coordinate values in the Cartesian coordinate system;

(3) the analysis object is at least a part of the tire tread portion having a tread face and provided with tread grooves;

(4) the tread grooves include a circumferentially continuously extending straight groove.

Therefore, it is possible to intentionally, accurately arrange the division surfaces between the elements adjacent to each other in the tire circumferential direction so that the division surfaces become parallel with each other leaving sufficient distances therebetween because the primary tire model is not curved around the tire revolution axis.

such meshing of the primary tire model can be done in a short time by the use of a generally available auto-mesh generation software.

The finish tire model can be obtained from the primary tire model through a transformation of coordinate system, therefore, the tire model in which sufficient distances remain between the opposite division surfaces can be generated in a short time without the need for good skills and experiences of human.

## Brief Description of the Drawings

Fig. 1 is a perspective view of a computer for implementing a generating method as an embodiment of the present invention.
Fig. 2 is a perspective view of a tire.
Fig. 3 is a flow chart of the generating method.
Fig. 4 is a flow chart of a primary process of the generating method.
Fig. 5 is a perspective view of a part of the tread portion of the tire rendered from the contour data.
Fig. 6 is a perspective view showing an example of the primary tire model.

Fig. 7 is a closeup of a part of Fig. 6.

Fig. 8 is a perspective view for explaining a transformation of the primary tire model.

Fig. 9 is a diagram for explaining a cylindrical coordinate system employed in a transforming process of the generating method.

Fig. 10 is a perspective view of the finish tire model created from the primary tire model.

Fig. 11 is a flow chart of the transforming process in this embodiment.

Fig. 12 is a cross sectional view showing of another example of the finish tire model created from another example of the primary tire model.

## Description of the Preferred Embodiments

Embodiments of present invention will now be described in detail in conjunction with the accompanying drawings.

The method for generating a tire model according to the present invention (shortly, the "generating method") is to generate, by the use of a computer, a three-dimensional tire model of an analysis object for use in computer numerical analyses.

The analysis object is the entirety or a part of an annular tire. In this embodiment, the analysis object is the entirety or a part of the tread portion of the tire.

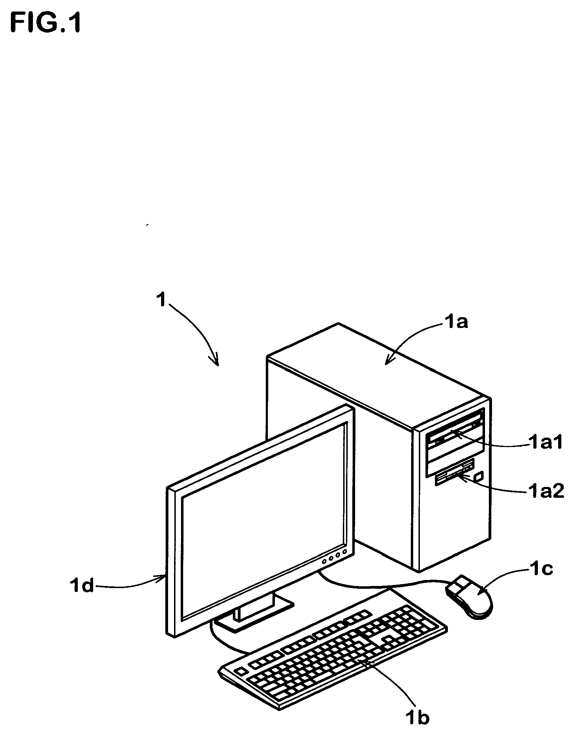

As shown in Fig. 1 for example, the computer 1 implementing the generating method comprises a main body 1a, a keyboard 1b, a mouse 1c and a display 1d. The main body 1a comprises an arithmetic processing unit (CPU), memory, storage devices such as magnetic disk, disk drives 1a1 and 1a2 and the like. In the storage device, programs/software for carrying out the generating method is stored.

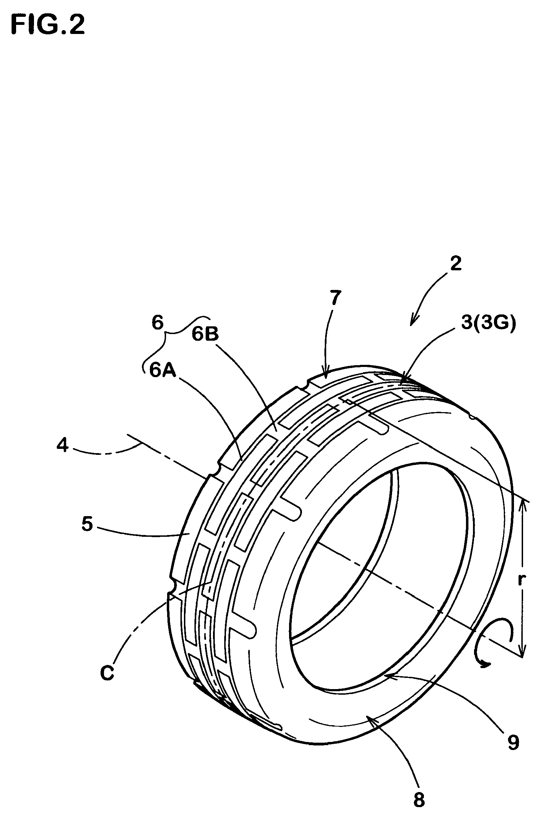

As shown in Fig. 2, in the tread portion 3 of the tire 2, a tread rubber 3G is disposed radially outside a carcass (not shown).

The tread rubber 3G is provided in the tread face 5 with tread grooves 6 defining a tread pattern.

The tread grooves 6 may include a circumferential groove 6A extending circumferentially of the tire for example in a linear fashion, and a plurality of axial grooves 6B extending crosswise to the circumferential groove 6A.

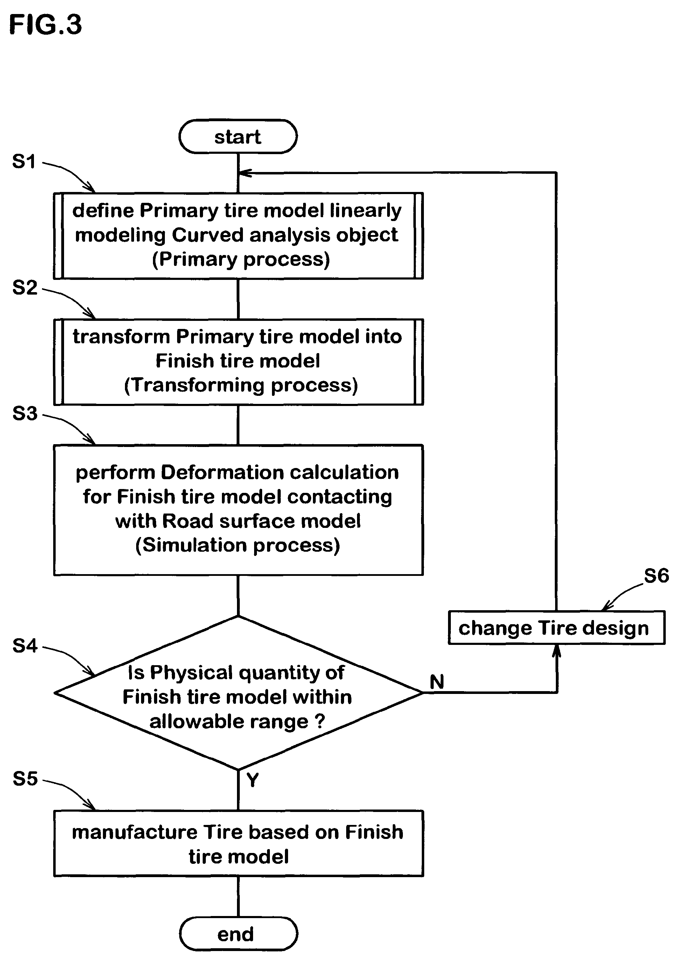

Fig. 3 shows a flowchart of a generating method as an embodiment of the present invention, where the analysis object 7 is a part of the tread portion 3 curved around the tire revolution axis 4.

\* Primary process S1

In the primary process S1, a primary tire model linearly modeling the curved analysis object 7 is defined in the computer 1.

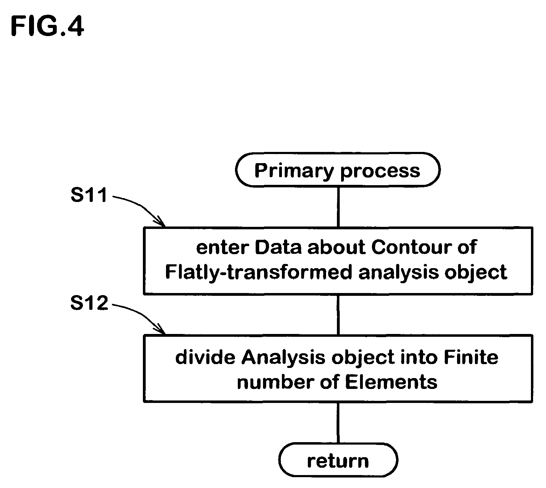

Fig. 4 is a flowchart of the primary process S1.

\*\* Process S11

In the process S11, data about the contour of the flatly-transformed analysis object 7 are entered in the computer 1.

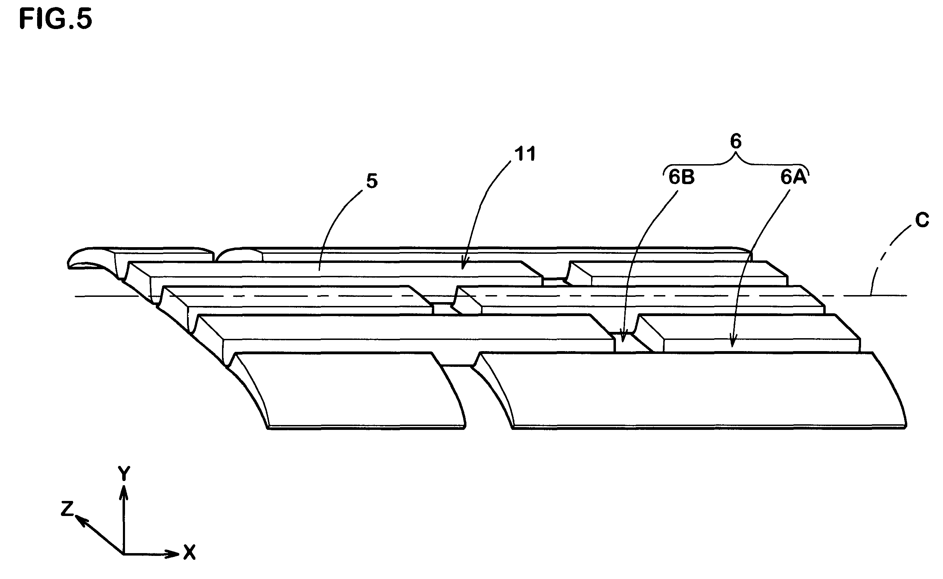

The analysis object 7 (a part of the tread portion 3 shown in Fig. 5) which is flatly transformed not to curve around the tire revolution axis 4, is obtained from a design drawing of a two-dimensional tread pattern for example, and data about the contour thereof are defined as the contour data 11. The contour data 11 include data about the tread pattern including circumferential grooves 6A and axial grooves 6B. In this embodiment, however, the contour data 11 do not include data about the bottom surfaces of the circumferential grooves 6A and the axial grooves 6B.

Since the contour data 11 do not include data about curvature around the tire revolution axis 4, it is possible to define the contour data 11 which can accurately reproduce the tread pattern including not only the grooves but also sipes, by the use of the two-dimensional design drawing.

The contour data 11 include coordinate values which can specify the contour shape of the tread portion 3. The coordinate values are of the X-axis, Y-axis and z-axis in a cartesian coordinate system, wherein
a position in the tire circumferential direction is indicated by an X-axis coordinate value, a position in the tire radial direction is indicated by a Y-axis coordinate value, and
a position in the tire axial direction is indicated by a Z-axis coordinate value.

\*\* Meshing process S12

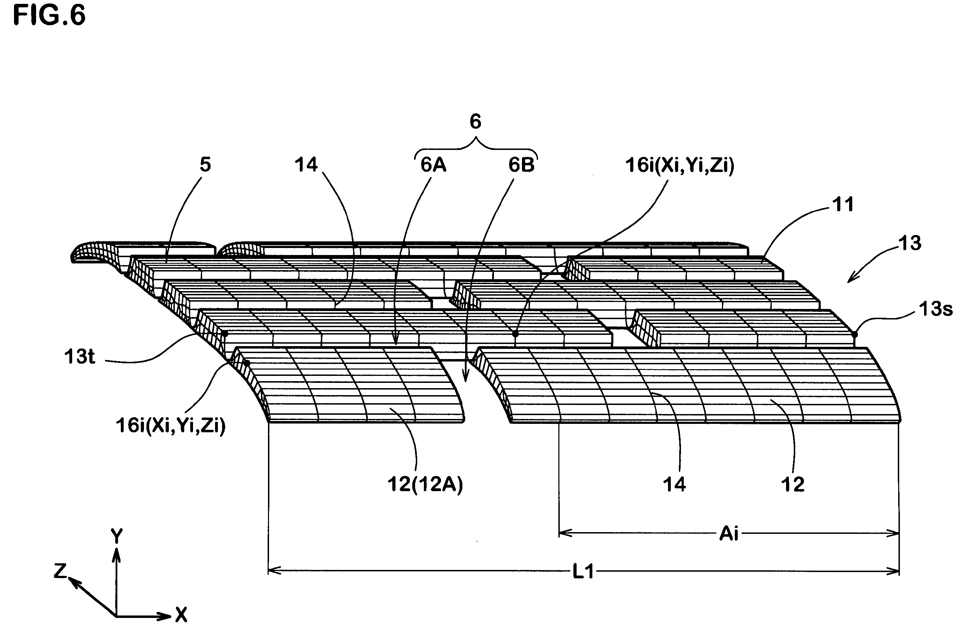

In the meshing process S12, as shown in Fig. 6, the flatly-transformed analysis object 7 which is defined by the contour data 11, is divided by the computer 1 into a finite number of elements 12 processable by a computer numerical analysis method. Thereby, a primary tire model 13 (EF model) not curved around the tire revolution axis 4 is produced. As to the computer numerical analysis method, for example, a finite element method, a finite volume method, a finite difference method or a boundary element method may be employed. In this embodiment, a finite element method is employed.

At any rate, the primary tire model 13 has a number of division surfaces 14 each between the elements 12 adjacent in the tire circumferential direction or adjacent in the tire tire axial direction.

It is preferable that the division surfaces 14 between the elements 12 adjacent in the tire circumferential direction are defined as being parallel with each other. Such arrangement becomes possible since the primary tire model 13 does not curve around the tire revolution axis 4.

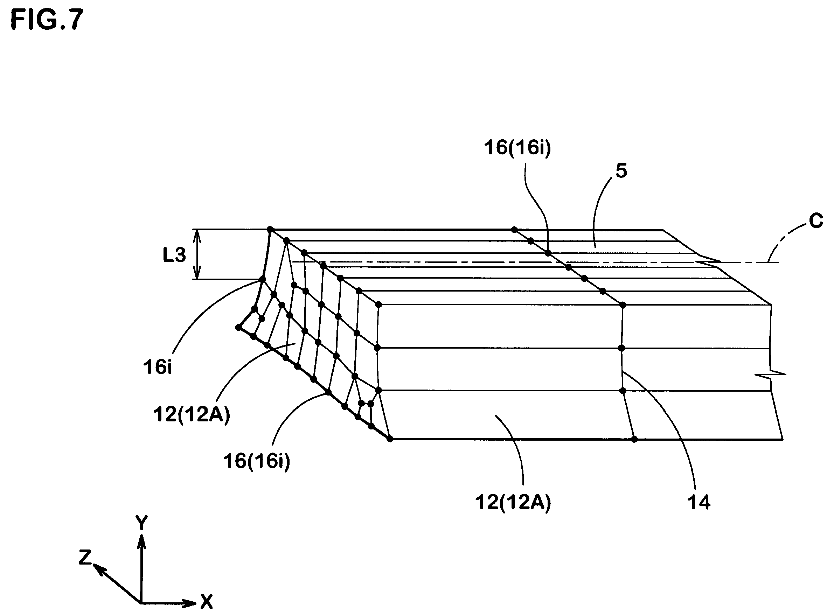

In this embodiment, each of the elements 12 is a hexahedral element 12A as shown in Fig. 6 and Fig. 7.

It is desirable that the above-mentioned division surfaces 14 between the elements 12 adjacent to each other in the tire circumferential direction are flat and perpendicular to the tread face 5 of the primary tire model 13.

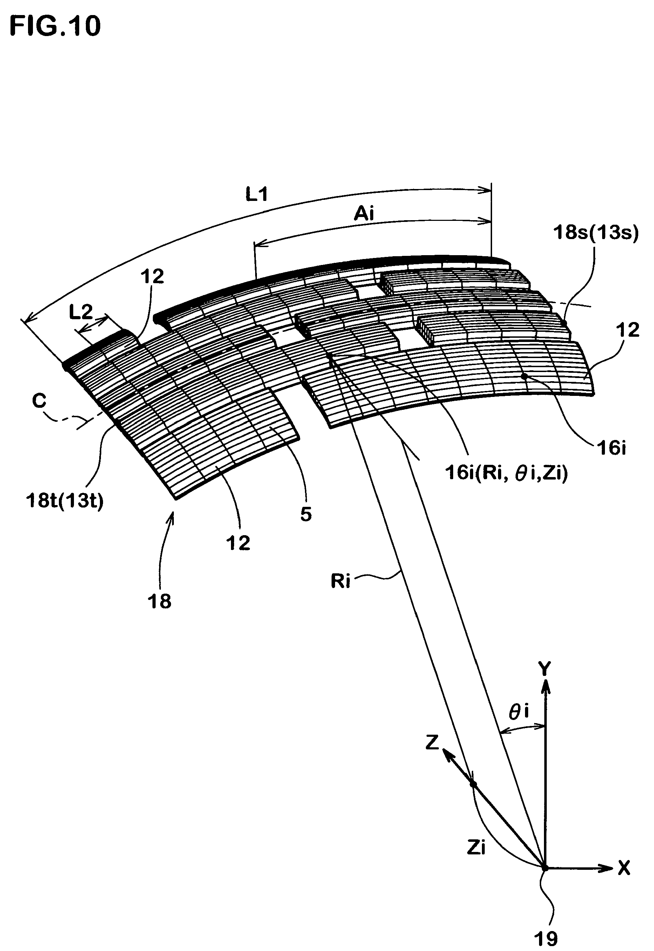

It is desirable that, on each element 12, at least one node point 16 is defined at a center point of the element 12 in the widthwise direction of the primary tire model 13 so as to precisely curve the primary tire model 13 into the finish tire model 18 (shown in Fig. 10) in the after-mentioned transforming process S2.

The meshing of the primary tire model 13 can be achieved by an auto-mesh generation software (for example, "Gridgen" a product of Pointwise, Inc.) performed by the computer 1.

Further, on each element 12, there are defined an identifying number of the element, identifying numbers of node points 16, coordinate values of the node points 16, and numerical data about material characteristics, e.g. density, Young's modulus, damping factor and the like.

Such numerical data relating to each element 12 are stored in the computer 1.

In the meshing process S12, therefore, as the primary tire model 13 is not curved, it can be divided into the elements 12 while leaving sufficient distances between the opposite division surfaces 14 even by the use of an auto-mesh generation software.

As explained above, in the primary tire model 13, the position of each node point $16i$ ($i=1, 2, 3,---$) is expressed by coordinate values ($Xi, Yi, Zi$) in the cartesian coordinate system.

* Transforming process S2

In the transforming process S2, the primary tire model 13 is transformed into a finish tire model 18 by the computer 1. More specifically, the coordinate values ($xi, Yi, zi$) of each node point $16i$ of the primary tire model 13 are converted to coordinate values ($Ri, \theta i, Zi$) of the node point $16i$ in a cylindrical coordinate system based on the curvature of the analysis object 7 around the tire revolution axis.

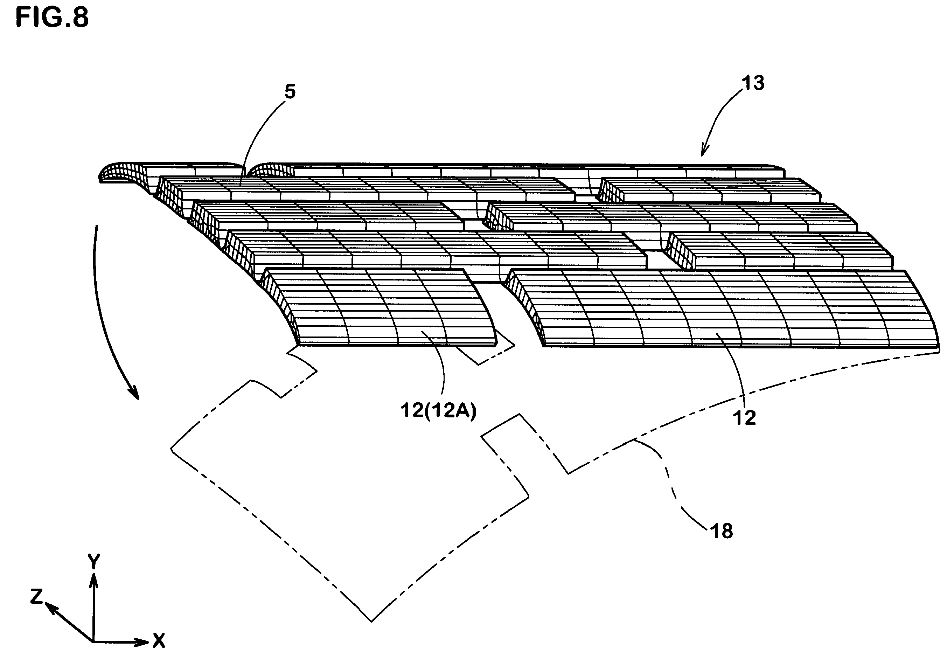

Then, using the converted coordinate values ($Ri, \theta i, Zi$), the curved finish tire model 18 is defined as shown in Fig. 8 and Fig. 10.

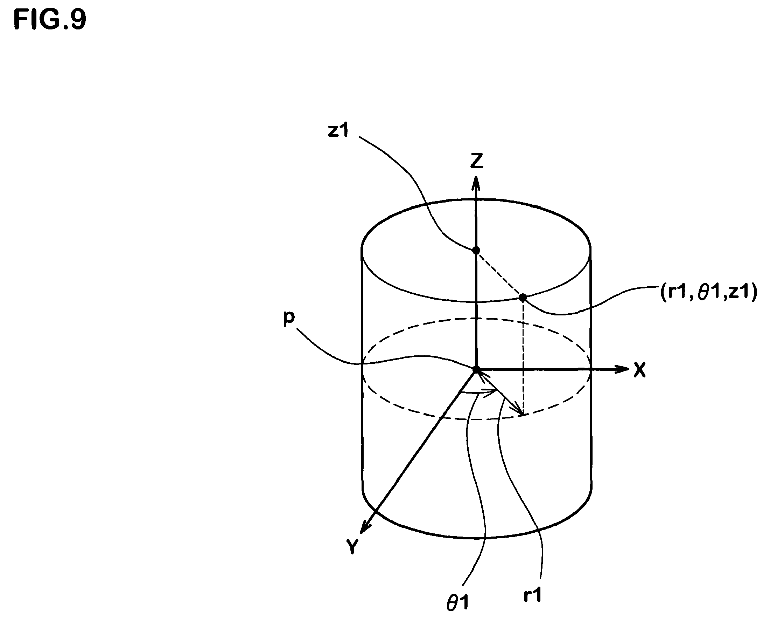

Fig. 9 shows the cylindrical coordinate system in relation to the cartesian coordinate system.

In the cylindrical coordinate system, the position of a point is expressed by a coordinate value $z1$ measured from the origin p in parallel with the Z-axis, an angle $\theta 1$ around the z-axis measured from the Y-axis, and a radius $r1$ measured radially from the Z-axis.

Each node point $16i$ in the finish tire model 18 is expressed by coordinate values ($Ri, \theta i, zi$) in the cylindrical coordinate system as shown in Fig. 10. More specifically, the position in the tire circumferential direction of each node point $16i$ in the finish tire model 18 is defined by an angle $\theta i$ around the Z-axis measured from the Y-axis. The position in the tire radial direction of each node point $16i$ in the finish tire model 18 is defined by the radius $Ri$ measured from the Z-axis. The position in the tire axial direction of each node point $16i$ in the finish tire model 18 is defined by the Z-axis coordinate value $zi$ measured from the origin 19 in the same way as the primary tire model 13.

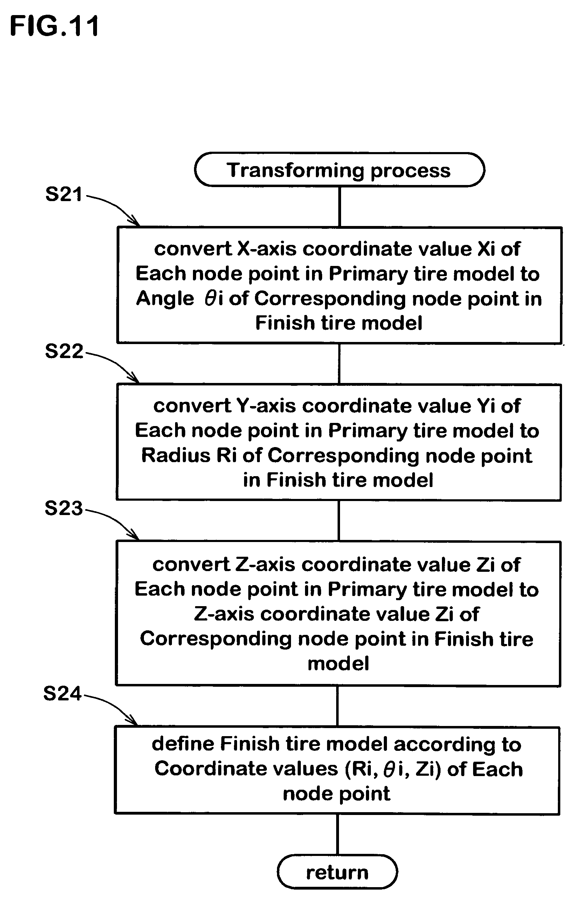

Fig. 11 is a detailed flowchart of the transforming process S2 in this embodiment.

** Process S21

In the process S21, the X-axis coordinate value $Xi$ of each node point $16i$ in the primary tire model 13 is converted to the angle $\theta i$ of the node point $16i$ in the finish tire model 18 based on the curvature of the analysis object 7.

If the angle around the tire revolution axis between any two points on the analysis object 7 is $\alpha$, and the circumferential distance between the corresponding two points on the primary tire model which circumferential distance is defined as a difference between their X-axis coordinate values is L1, the X-axis coordinate value $Xi$ can be converted to the angle $\theta i$ by using the following calculating formula:

$$\theta i = k \times Xi$$

wherein
k is a coefficient determined from the curvature of the analysis object 7, and in this embodiment, $k=\alpha/L1$.

Incidentally, when the above-mentioned two points are positioned at the tread face 5 in the vicinity of the tire equator C, the center angle $\alpha$ corresponding to the circumferential distance L1 can be obtained by the following calculating formula:

$$\alpha = L1 \times 360/2\pi r$$

wherein
r is the radius of the tire. For the radius r, a designed value or the actual measured value can be used.

In this embodiment, as shown in Fig. 6 and Fig. 10, the X-axis coordinate value $Xi$ at one end 13s of the primary tire model 13 is zero,
the angle $\theta i$ at one end 18s of the finish tire model 18 corresponding to the one end 13s is 0 degrees,
the X-axis coordinate value $Xi$ at the other end 13t of the primary tire model 13 is L1, and
the angle $\theta i$ at the other end 18t of the finish tire model 18 corresponding to the other end 13t is $\alpha$.

Accordingly, with respect to the node points $16i$ positioned between one end (18s or 13s) and the other end (18t or 13t), the angle $\theta i$ of each node point $16i$ in the finish tire model 18 can be obtained by multiplying the X-axis coordinate value $Xi$ of the concerned node point 16i (or corresponding circumferential length Ai measured from one end 18s or 13s) by the above-mentioned ratio α/L1.

Data about the obtained angles θi of the node points 16i are stored in the computer 1.

As explained above, in the process S21, based on the curvature of the analysis object 7 (or coefficient k), the X-axis coordinate value Xi of each node point 16 in the primary tire model 13 is converted to the angle θi of the node point 16 in the finish tire model 18.

The total of the circumferential lengths L2 of the elements 12 of the finish tire model 18 measured at the tread face 5 becomes very close to the circumferential length L1 of the primary tire model 13 (corresponding to the arc length in the finish tire model 18), and the dimension error of the tread pattern in the finish tire model 18 from the tread pattern of the primary tire model 13 becomes minimized.

** Process S22

In the process S22, the Y-axis coordinate value Yi of each node point 16i in the primary tire model 13 is converted to the radius Ri of the node point 16i in the finish tire model 18.

In general, the radius r of the tire is measured at the tread face 5 in the vicinity of the tire equator C.

With respect to the node points 16i positioned at the tread face 5 in the vicinity of the tire equator C, the Y-axis coordinate value Yi of each node points 16i is converted to the value of the radius r, in other words, the value of the radius r is assigned thereto.

with respect to the other node points 16i, the Y-axis coordinate value Yi of each node points 16i is converted to a value (r-L3), wherein L3 is the radial distance (shown in Fig. 7) measured in the primary tire model 13 between the concerned node point 16i and the node point 16i to which the radius r is assigned. Accordingly, the radial distance L3 is maintained in the finish tire model 18 to prevent the collapse of the element.

Thus, the Y-axis coordinate values Yi of all the node points 16 of the primary tire model 13 are converted to the radii Ri in the finish tire model 18.

Data about the radii Ri of the node points 16i are stored in the computer 1.

** Process S23

In the process S23, the Z-axis coordinate value Zi of each node point 16i in the primary tire model 13 is converted to the Z-axis coordinate value Zi of the node point 16i in the finish tire model 18.

In this embodiment, the Z-axis in the cartesian coordinate system coincides with the Z-axis of the cylindrical coordinate system. In other words, the two systems are so defined. Therefore, the coordinate value Zi of each node point 16i of the finish tire model 18 can be set to the coordinate value Zi of the node point 16i of the primary tire model 13 without conversion.

Data about the coordinate values Zi of the node points 16i are stored in the computer 1.

** process S24

In the process S24, according to the coordinate values (Ri, θi, Zi) of each node point 16i in the finish tire model 18, the curved finish tire model 18 is defined.

More specifically, according to the converted coordinate values (Ri, θi, Zi), each node point 16i in the finish tire model 18 is disposed in the cylindrical coordinate system. Then, based on the coordinate values (Ri, θi, Zi), the elements 12 of the finish tire model 18 are redefined with respect to the sizes of the elements 12 and the distances between the node points 16. Thereby, the curved finish tire model 18 as shown in Fig. 10 is generated.

As described above, in the transforming process S2, the transformation from the primary tire model to the finish tire model is computed, based on the curvature of the analysis object 7. Thus, it is possible to generate the finish tire model 18 of the analysis object 7 with high accuracy through the transforming process s2, and there is no need to mesh the analysis object manually.

* simulation process s3

In this embodiment, the generating method comprises a simulation process S3 in which the computer 1 performs a deformation calculation for the finish tire model 18 when contacted with a model (not shown) of a road surface.

In this simulation process s3, a predetermined load condition is defined on the finish tire model 18, and a physical quantity of the finish tire model 18 is computed.

In the deformation calculation, based on the shape, material characteristics and the like of each element, a mass matrix, rigidity matrix and damping matrix of each element 12 are created, and they are combined to create a matrix of the total system.

Further, a motion equation is generated by applying various conditions, and the computer 1 makes the deformation calculation at intervals of, for example, 1 microsecond.

The deformation calculation can be made, for example, by the use of a commercially available application software for finite element analysis such as "LS-DYNA" a product of Livermore Software Technology Corporation.

* judge process s4

In this embodiment, the generating method further comprises a process s4 in which the computer 1 judges if the computed physical quantity of the finish tire model 18 is within the predetermined allowable range.

If within the allowable range, the tire 2 is actually manufactured based on the finish tire model 18. -- (process s5)

If outside the allowable range, the design of the tire 2 (for example the sizes of the tread grooves 6) is changed.-(process S6)

Then, the processes s1 to s4 are again performed.

Thus, it is possible to design the tire 2 whose physical quantity falls within the allowable range.

In the above-mentioned simulation process S3, if the deformation calculation has to be carried out in a Cartesian coordinate system, the coordinate values (Ri, θi, Zi) in the cylindrical coordinate system, of the node points 16i of the finish tire model 18 are converted to coordinate values (Xi, Yi, Zi) in the cartesian coordinate system, using the following three formulas:

$$Xi = Ri \times \sin\theta i$$

$$Yi = Ri \times \cos\theta i$$

$$Zi = Zi.$$

According to the present invention, the analysis object 7 may be the entirety of the tread portion 3.

when the tire rolling on a road surface is to be simulated, the simulation process s3 is modified such that the finish tire model 18 including the model of the entire tread portion 3 is rolled over a road surface model (not shown).

The analysis object 7 is not limited to the tread portion 3. The analysis object 7 may be any part of the tire as far as it is curved around the tire revolution axis. For example, the analysis object 7 may be sidewall portions 8, bead portions 9, a carcass (not shown), a tread reinforcing belt layer (not shown) or the like.

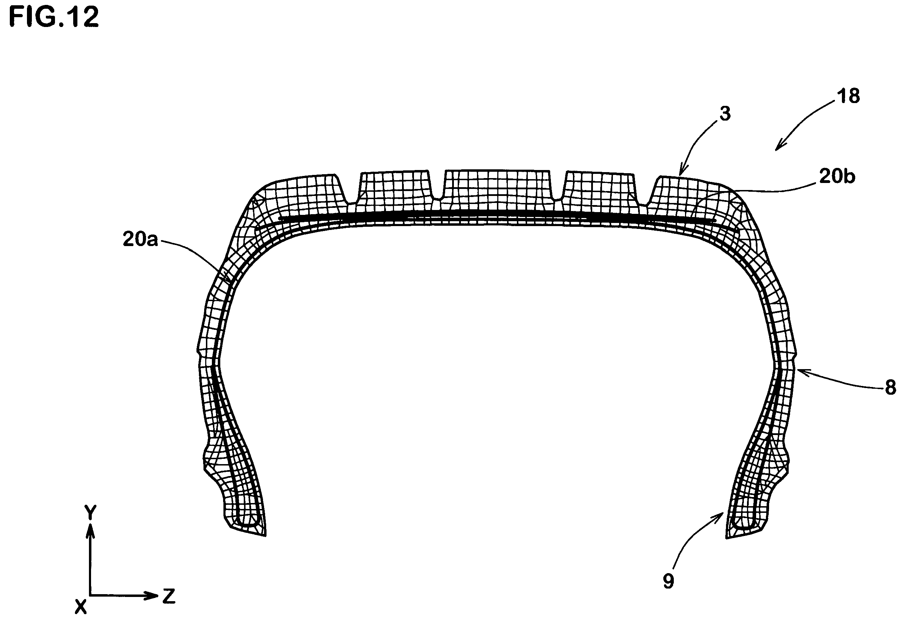

Further, the analysis object 7 may be the entirety of the tire including the tread portion 3, sidewall portions 8, bead portions 9, a carcass 20a, and a belt layer 20b so that the tire model 18 includes the corresponding parts as shown in Fig. 12.

## Claims

1. A method for generating a three-dimensional tire model by the use of a computer, the tire model being of an analysis object which is the entirety or a part of an annular tire curved around the tire revolution axis, the method comprising

   a primary process in which a primary tire model made up of three-dimensional elements is obtained by first flatly transforming the curved analysis object so that the primary tire model is not anymore curved around the tire revolution axis, the primary tire model having division surfaces each of which is between the elements adjacent to each other in the tire circumferential direction and defined as being flat and perpendicular to the tread face of the primary tire model, and coordinate values of node points of the elements in the primary tire model being defined based on a Cartesian coordinate system, and

   a transforming process in which based on curvature of the analysis object around the tire revolution axis, the coordinate values of the node points of the primary tire model are converted to coordinate values in a cylindrical coordinate system, whereby the primary tire model is transformed into a finish tire model curved around the tire revolution axis correspondingly to the curved analysis object.

2. The method according to claim 1, wherein each of the elements of the primary tire model is a hexahedral element.

3. The method according to claim 1 which further comprises
   a process in which the coordinate values in the cylindrical coordinate system, of the node points of the finish tire model are converted to coordinate values in a cartesian coordinate system.

4. The method according to claim 1, 2 or 3, wherein the analysis object is at least a part of the tire tread portion having a tread face and provided with tread grooves.

5. The method according to claim 4, wherein the tread grooves include a circumferentially continuously extending straight groove.

## Patentansprüche

1. Verfahren zum Erstellen eines dreidimensionalen Reifenmodells unter Verwendung eines Computers, wobei das Reifenmodell ein Analyseobjekt ist, das die Gesamtheit oder einen Teil eines ringförmigen Reifens ist, der um die Reifenumlaufachse herum gekrümmt ist, wobei das Verfahren umfasst

   einen primären Prozess, in welchem ein primäres Reifenmodell, das aus dreidimensionalen Elementen besteht, erhalten wird, indem zunächst das gekrümmte Analyseobjekt derart eben transformiert wird, dass das primäre Reifenmodell nicht mehr um die Reifenumlaufachse herum gekrümmt ist, wobei das primäre Reifenmodell Unterteilungsflächen aufweist, von denen sich jede zwischen den in der Umfangsrichtung des Reifens zueinander benachbarten Elementen befindet und als eben und senkrecht zu der Laufflächenseite des primären Reifenmodells definiert ist, und Koordinatenwerte von Knotenpunkten der Elemente in dem primären Reifenmodell auf der Basis eines kartesischen Koordinatensystems definiert werden, und einen Transformationsprozess, in welchem auf der Basis einer Krümmung des Analyseobjekts um die Reifenumlaufachse herum die Koordinatenwerte der Knotenpunkte des primären Reifenmodells in Koordinatenwerte in einem zylindrischen Koordinatensystem umgewandelt werden, wodurch das primäre Reifenmodell in ein Endreifenmodell transformiert wird, das um die Reifenumlaufachse herum entsprechend dem gekrümmten Analyseobjekt gekrümmt ist.

2. Verfahren nach Anspruch 1, wobei ein jedes der Elemente des primären Reifenmodells ein hexaedrisches Element ist.

3. Verfahren nach Anspruch 1, welches ferner einen Prozess umfasst, in welchem die Koordinatenwerte in dem zylindrischen Koordinatensystem der Knotenpunkte des Endreifenmodells in Koordinatenwerte in einem kartesischen Koordinatensystem umgewandelt werden.

4. Verfahren nach Anspruch 1, 2 oder 3, wobei das Analyseobjekt zumindest ein Teil eines Reifenlaufflächenabschnitts ist, der eine Laufflächenseite aufweist, die mit Laufflächenrillen versehen ist.

5. Verfahren nach Anspruch 4, wobei die Laufflächenrillen eine sich in Umfangsrichtung durchgehend erstreckende gerade Rille umfassen.

**Revendications**

1. Procédé pour générer un modèle de pneumatique tridimensionnel en utilisant un ordinateur, le modèle de pneumatique étant un objet d'analyse qui est la totalité ou une partie d'un pneumatique annulaire incurvé autour de l'axe de révolution du pneumatique, le procédé comprenant
un processus primaire dans lequel un module de pneumatique primaire constitué d'éléments tridimensionnels est obtenu en transformant en premier à plat l'objet d'analyse incurvé de sorte que le modèle de pneumatique primaire n'est plus du tout incurvé autour de l'axe de révolution du pneumatique, le modèle de pneumatique primaire ayant des surfaces de division dont chacune est entre les éléments adjacents les uns aux autres dans la direction circonférentielle du pneumatique et définie comme étant plate et perpendiculaire à la face de roulement du modèle de pneumatique primaire, et des valeurs de coordonnées des points nodaux des éléments dans le modèle de pneumatique primaire étant définies sur la base d'un système de coordonnées cartésien, et
un processus de transformation dans lequel, en se basant sur la courbure de l'objet d'analyse autour de l'axe de révolution du pneumatique, les valeurs de coordonnées des points nodaux du modèle de pneumatique primaire sont converties en valeur de coordonnées dans un système de coordonnées cylindrique, grâce à quoi le modèle de pneumatique primaire est transformé en un modèle de pneumatique fini incurvé autour de l'axe de révolution du pneumatique, correspondant à l'objet d'analyse incurvé.

2. Procédé selon la revendication 1, dans lequel chacun des éléments du modèle de pneumatique primaire est un élément hexaédrique.

3. Procédé selon la revendication 1, qui comprend en outre
un processus dans lequel les valeurs de coordonnées dans le système de coordonnées cylindrique des points nodaux du modèle de pneumatique fini sont converties en valeurs de coordonnées dans un système de coordonnés cartésien.

4. Procédé selon la revendication 1, 2 3, dans lequel l'objet d'analyse est au moins une partie de la portion de roulement du pneumatique ayant une face de roulement et dotée de rainures de roulement.

5. Procédé selon la revendication 4, dans lequel les rainures de roulement incluent une rainure droite s'étendant circonférentiellement en continu.

# FIG.1

# FIG.2

# FIG.3

start

S1 → define Primary tire model linearly modeling Curved analysis object (Primary process)

S2 → transform Primary tire model into Finish tire model (Transforming process)

S3 → perform Deformation calculation for Finish tire model contacting with Road surface model (Simulation process)

S4 → Is Physical quantity of Finish tire model within allowable range ?

N → S6 → change Tire design

Y

S5 → manufacture Tire based on Finish tire model

end

# FIG.4

```
        ( Primary process )
S11                 |
        ┌───────────────────────────┐
        │  enter Data about Contour of  │
        │ Flatly-transformed analysis object │
        └───────────────────────────┘
S12                 |
        ┌───────────────────────────┐
        │  divide Analysis object into Finite │
        │     number of Elements        │
        └───────────────────────────┘
                    |
              ( return )
```

# FIG.5

EP 2 833 328 B1

# FIG.6

# FIG.7

EP 2 833 328 B1

# FIG.8

EP 2 833 328 B1

FIG.9

EP 2 833 328 B1

# FIG.10

# FIG.11

Transforming process

S21

convert X-axis coordinate value Xi of Each node point in Primary tire model to Angle $\theta i$ of Corresponding node point in Finish tire model

S22

convert Y-axis coordinate value Yi of Each node point in Primary tire model to Radius Ri of Corresponding node point in Finish tire model

S23

convert Z-axis coordinate value Zi of Each node point in Primary tire model to Z-axis coordinate value Zi of Corresponding node point in Finish tire model

S24

define Finish tire model according to Coordinate values (Ri, $\theta i$, Zi) of Each node point

return

**FIG.12**

EP 2 833 328 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008155887 A